# EUROPEAN PATENT SPECIFICATION

(11) **EP 1 133 627 B1**
(45) Date of publication and mention of the grant of the patent: **05.03.2003**
(21) Application number: 99959287.6
(22) Date of filing: 19.11.1999
(51) Int. Cl.: F02B 31/00, F02F 1/42

(54) **A RECIPROCATING INTERNAL COMBUSTION ENGINE, PARTICULARLY OF THE DIRECT-INJECTION TYPE, AND A FILLING INTAKE DUCT FOR A CYLINDER THEREOF**
DIREKTEINGESPRITZTE BRENNKRAFTMASCHINE MIT EINEM ZYLINDEREINLASSKANAL
MOTEUR ALTERNATIF A COMBUSTION INTERNE, PARTICULIEREMENT DU TYPE A INJECTION DIRECTE, ET CONDUIT D'ADMISSION DE REMPLISSAGE POUR LE CYLINDRE DU MOTEUR

(30) Priority: 23.11.1998 IT TO980980
(43) Date of publication of application: 19.09.2001
(73) Proprietor: FIAT AUTO S.p.A., 10135 Torino (IT)
(72) Inventor: MAGRO, Lorenzo, I-10123 Torino (IT); MAIORANA, Giovanni, I-13900 Biella (IT)
(74) Representative: Quinterno, Giuseppe
(86) International application number: EP9908906
(87) International publication number: WO00031392

(56) References cited:
- EP-A- 0 067 700
- EP-A- 0 666 409
- FR-A- 2 198 059
- US-A- 4 308 832

## Description

The present invention relates in general to reciprocating internal combustion engines and, in particular, to intake ducts for such engines.

More specifically, the invention relates to a reciprocating internal combustion engine, particularly of the direct-injection type, of the kind defined in the preamble of Claim 1.

In known engines various methods are used for arranging the intake ducts so as to generate a high degree of turbulence in the fluid admitted to the cylinder in order to achieve rapid and efficient combustion and to try to keep the structure of the ducts, and hence of the engine as a whole, fairly simple.

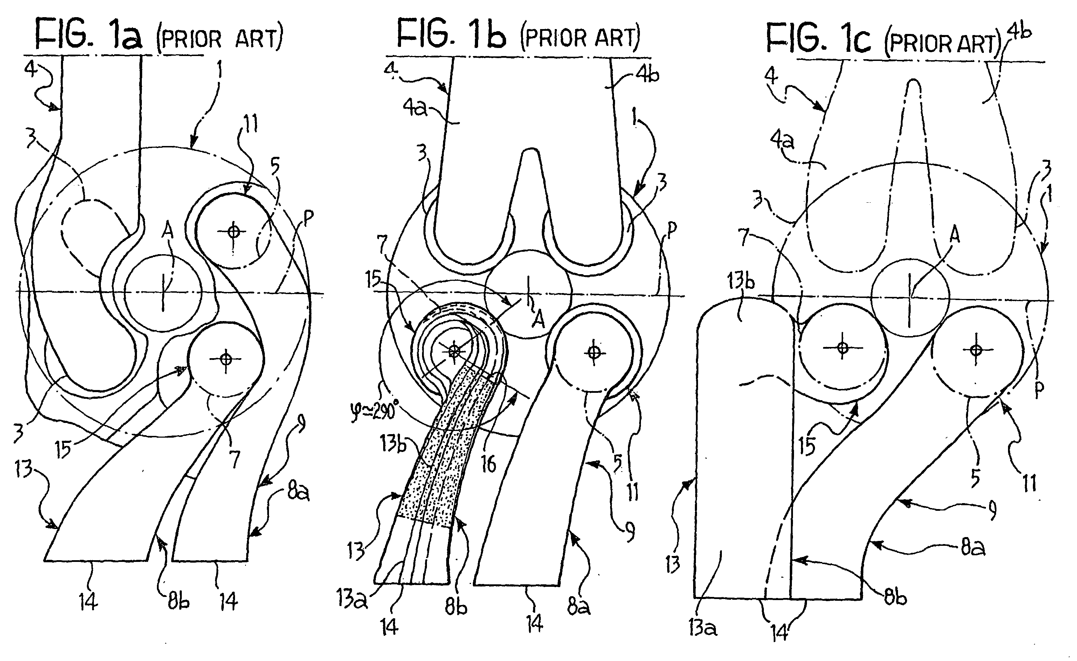

In particular, appended Figures 1a, 1b and 1c show three specific solutions adopted for the ducts associated with the valves of the cylinders of engines with four valves per cylinder.

With reference to Figure 1a, the seats 5 and 7 of the intake valves may be arranged with their axes in a plane perpendicular to the longitudinal plane P of the cylinder block (or at a small angle to the perpendicular). In this case, an intake duct 8a associated with the seat 5 comprises an inlet portion 9 substantially parallel to the plane of the top of the cylinder block, for connection to the intake manifold of the engine (not shown), and an outlet portion 11 by means of which the fluid is supplied to the cylinder 1. The duct 8a may be of the plunging type and may generate a swirling motion of the fluid admitted to the cylinder due to its position relative to the axis of the cylinder, or may have a scroll-shaped outlet portion with a helix winding in the direction of the swirling motion to be induced in the fluid.

Owing to the shape and arrangement of the duct 8a, the fluid supplied to the cylinder 1 is in any case subject to a swirling motion coaxial with the axis A of the cylinder 1 and having an anticlockwise sense of rotation with reference to the drawings.

Another intake-valve seat 7 is disposed immediately upstream of the seat 5 with reference to the direction of the swirling motion of the fluid supplied through the duct 8a. A second duct 8b is associated therewith and, when its outlet portion 15 is scroll-shaped, it winds in the same direction as the swirling motion generated by the duct 8a. A moderately arcuate inlet portion 13 extends from the outlet portion 15 towards the intake manifold of the engine. This known arrangement has, however, been found inefficient because the two fluid flows supplied to the cylinder 1 through the two ducts 8a and 8b interact with one another negatively, causing a considerable reduction in the effective turbulence index due to the two ducts in combination, in comparison with the theoretical turbulence indices of the two ducts considered separately. Moreover, the shape of the intake ducts of this arrangement is relatively complex to produce, since the core used to produce the cavity of the interspace for the passage of the cooling water of the engine head has to be formed in several separate parts and the ducts also have individual cores, substantially increasing production costs; moreover, the exhaust duct 4, which is a single duct for the two exhaust-valve seats 3, is inefficient since it is affected by a reduced permeability during the operation of the engine.

The known arrangement of Figure 1b, in which the same reference numerals as in Figure 1a are used to indicate identical or similar parts, on the other hand, provides for the axes of the two seats 5 and 7 of the intake valves to be arranged in a plane parallel to the longitudinal plane P of the cylinder block, which constitutes an advantage from the point of view of the construction of the engine head. In this case, a main intake duct 8a of the plunging type (but which may alternatively have a scroll-shaped end portion) is associated with the seat 5 and a filling intake duct 8b with a scroll-type outlet portion 15 is associated with the seat 7. An inlet portion 13 substantially parallel to the plane of the top of the cylinder block is connected to the outlet portion 15 and has a first end 14 for connection to the intake manifold of the engine and a second end 16 for connection to the portion 15.

In particular, the portion 13 comprises a mouth portion 13a which is substantially straight or has a very small curvature, and a guide portion 13b which terminates at the end 16 of the inlet portion 13 and is thus interposed between the mouth portion 13a and the scroll-shaped portion 15. The guide portion 13b has a slight curvature in the opposite direction to that of the portion 15 with a radius of curvature about ten times greater than that of the seat 7, so that the entire inlet portion 13 is formed approximately as a tangent to the scroll-shaped portion 15, although it is slightly arcuate.

This arrangement enables the intake ducts, and also the exhaust ducts 4a and 4b to be kept well separated, at least in their first portions, the exhaust ducts 4a and 4b then converging in a single duct 4. This arrangement has the advantages of rendering the structure of the engine head fairly simple so that it can be produced with a one-piece core, and of ensuring good efficiency of the exhaust ducts. However, it still does not represent an optimal solution. In fact, because of the geometry of the duct 8b and of its position relative to the cylinder 1, which is practically essential owing to the presence of the other ducts and of the members for connecting the head to the cylinder block, such as holes for the passage of its clamping screws (not shown in the drawings), the duct 8b provides poor fluid-dynamic performance characterized by an unfavourable turbulence index so that, in practice, it does not actually contribute to the generation of a swirling motion in the fluid supplied to the cylinder 1 through the intake ducts 8a and 8b. The turbulence index is a parameter which varies in dependence on the angle ϕ of the positioning of the scroll-shaped portion 15 relative to the axis A of the cylinder 1. In practice, the angle ϕ is formed between the plane extending through the axis A of the cylinder 1 and the axis of the valve of the seat 7 and a plane parallel to the end portion 16 of the duct portion 13, that is, to the initial section of the scroll-shaped portion 15, which passes through the axis of the valve of the seat 7.

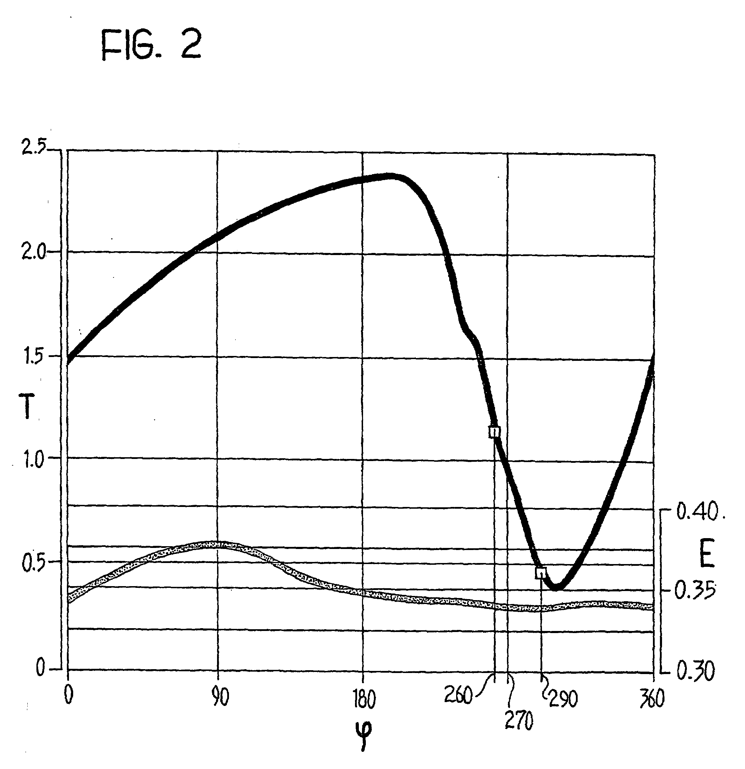

Figure 2 is a graph which shows qualitatively the values adopted by the turbulence index T (the curve shown by a solid line) and by the mean discharge coefficient E (the curve shown by a dotted line) for a scroll-shaped intake duct, with variations of the angle ϕ. As can be seen, whereas the coefficient E varies little with variations in the angle ϕ, the index T is very sensitive to variations thereof. In particular, the index T adopts a minimum value for values of the angle ϕ of about 280° - 300°.

In practice, a scroll-shaped intake duct of standard geometry is used to evaluate the variation of T as a function of ϕ, the angular position of the intake duct being modified relative to a valve seat positioned at a fixed point relative to the head of the respective cylinder. In the specific case, the value of the angle ϕ is actually about 290° which corresponds, as shown in Figure 2, to the region close to the minimum of the turbulence index, so that the performance of the duct 8b is disadvantageous with regard to the swirling motion to be induced in the fluid supplied to the cylinder 1. This is due basically to the fact that the resultant of the velocity vector of the fluid which passes through the end section 16 of the mouth portion of the duct 8b, that is, the inlet section of the scroll-shaped portion 15, is directed substantially towards the axis A of the cylinder 1, or is even deflected to the opposite side of the axis A to the valve seat 5 and hence in the opposite direction to the swirling motion generated by the fluid admitted to the cylinder 1 through the duct 8a. In this situation, the duct 8b does not effectively contribute to the generation of the swirling motion of the fluid inside the cylinder 1, adversely affecting the performance of the engine in comparison with the theoretical advantage which should result from the presence of the filling intake duct. The terms "main" and "filling" are derived from the fact that, in this configuration, the first duct is that which substantially generates the turbulent motion, whereas the second is limited to providing a contribution in terms of air-flow; its shape therefore has the main function of not generating turbulence in the opposite direction to that of the turbulence induced by the first duct.

In an attempt to overcome the limitations of the typical arrangement shown in Figure 1b, a filling intake duct 8b having the shape shown in Figure 1c, in which the same reference numerals as those of Figures 1a and 1b are used, has been proposed. This duct 8b comprises an inlet portion 13 of which the month portion 13a is parallel to the plane of the top of the cylinder block and is disposed in a raised position relative to the main intake duct 9, and of which the guide portion 13b, connected to the scroll-shaped portion 15, extends like an elbow from the portion 13a and constitutes an almost vertical ramp.

This solution considerably reduces the value of the angle ϕ in comparison with that of the arrangement of Figure 1b, but makes the geometry of the duct 8b excessively complex so that the ducts for the cooling water in the engine head are more tortuous and the head is very bulky vertically.

A reciprocating internal combustion engine of the initially defined kind is disclosed in EP-A-0 666 409. In this prior engine the intake valve seats of the main intake duct and the intake filling duct have their axes lying in a plane which is almost orthogonal to the conventional longitudinal plane of the cylinder, and a substantial portion of the main intake duct extends above the filling intake duct. The geometry of said ducts is therefore rather complicate and the cylinder head is rather bulky in the vertical direction.

The invention overcomes the inconveniences of the prior art by an engine according to Claim 1.

By virtue of this concept, it is possible to use a filling intake duct with a geometry close to that of more conventional filling ducts, that is, with the entire inlet portion of the duct extending substantially parallel to the plane of the top of the cylinder block, permitting minimal modification of the structure of the engine head and of the ducts for the cooling water, good permeability of the exhaust ducts, and a positioning angle ϕ of the scroll-like portion relative to the axis of the cylinder which differs substantially from the range between 280° and 300°, so as to achieve a relatively high turbulence index for the intake ducts and hence optimal engine performance.

A further subject of the invention is a filling intake duct for a cylinder of a reciprocating internal combustion engine, particularly of the direct-injection type, comprising an inlet portion to be arranged substantially parallel to the plane of the top of the cylinder block, and having a first end for connection to an intake manifold of the engine and a second end connected to a scroll-shaped outlet portion of the duct opening into the cylinder in a respective intake-valve seat, in which the inlet portion has a mouth portion which is substantially straight and a guide portion having an arcuate shape with opposite curvature to the scroll-shaped portion and interposed between the mouth portion and the scroll-shaped portion, characterized in that its guide portion has a mean radius of curvature of the same order of magnitude as the radius of the respective valve seat.

Further characteristics and advantages of the invention will become clearer from the following detailed description given with reference to the appended drawings, provided purely by way of non-limiting example in which:
Figures 1a, 1b and 1c, which have been described above, are similar schematic plan views showing respective known solutions of the architecture of the intake and exhaust ducts of the cylinders of reciprocating internal combustion engines with four valves per cylinder,
Figure 2 is a graph showing qualitatively the variation of the turbulence index and of the mean discharge coefficient for a scroll-shaped intake duct, as a function of the angle of positioning of the scroll-shaped portion relative to the axis of the respective cylinder, and
Figure 3 is a schematic elevational view of a filling intake duct according to the invention.

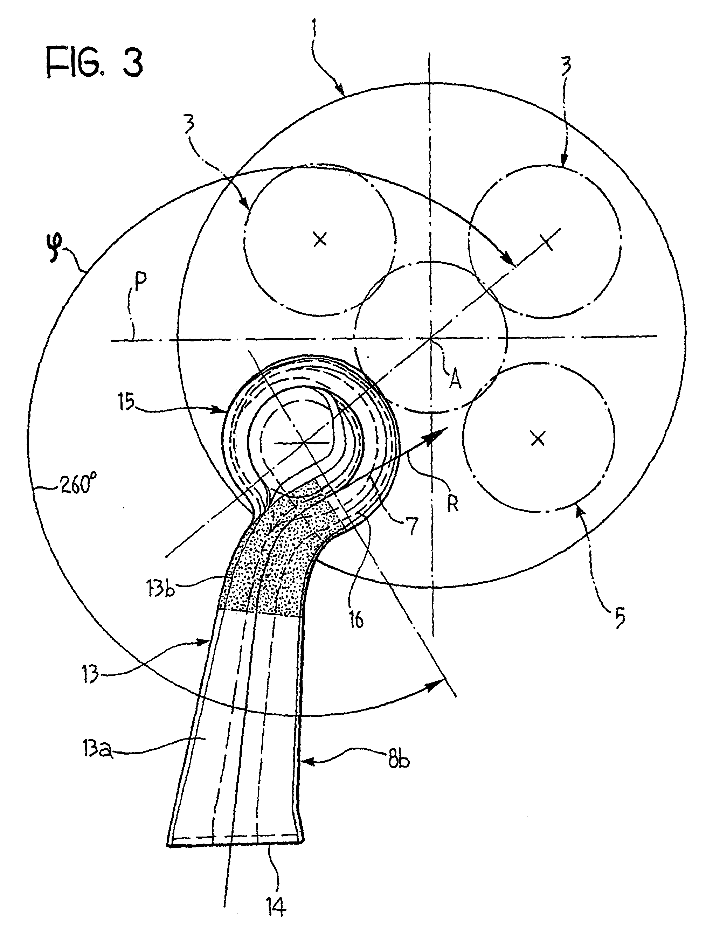

Figure 3 shows a filling intake duct 8b according to the invention, associated with a valve seat 7 of a cylinder 1 of a reciprocating internal combustion engine with direct fuel-injection, for example of the Diesel type.

The general arrangement of the other ducts associated with the cylinder 1 is not shown in Figure 3 in order not to detract from the clarity of the drawing, since this general arrangement does not fall within the scope of the invention and since it is wholly analogous to that shown in Figure 1b. For an engine with four valves per cylinder, the arrangement provides, in short, for a main intake duct of the plunging type, associated with the valve seat 5, and for a pair of exhaust ducts associated with a pair of exhaust-valve seats 3 which then converge into a single duct 4. In particular, the two exhaust-valve seats 3 and the two intake-valve seats 5 and 7 are arranged, respectively, in planes substantially parallel to the longitudinal plane P of the cylinder block. Naturally, the arrangement of the intake and exhaust valves may be varied with respect to that shown, for example, for an engine in which the cylinders have more than four valves per cylinder, by small;modifications within the capabilities of a skilled person.

As in the case of Figure 1b, the duct 8b has a scroll- shaped outlet portion 15 winding in the same direction as the rotation induced in the fluid in the cylinder 1 by the main intake duct 8a, which is anticlockwise with reference to Figure 3, and an inlet portion 13 substantially parallel to the plane of the top of the cylinder block. This portion 13 is shaped in a manner such that the resultant R of the velocity vector of the fluid emerging from the end section 16 is directed in a direction such as to be deflected substantially, relative to the axis A of the cylinder 1, to the side on which the valve seat 5 is disposed, that is, in a manner such as to contribute actively to the swirling motion induced in the fluid supplied to the cylinder 1 through the valve seat 5 by means of the main supply duct.

The inlet portion 13 has, in particular, a mouth portion 13a which is substantially straight or has a small curvature and which extends from'its first end 14 as far as a curved guide portion 13b which terminates in the region of the end section 16 of the portion 13 and has a pronounced curvature in the opposite direction to that of the scroll-shaped portion 15. The guide portion 13b has, in particular, a relatively small mean radius of curvature, that is, of the same order of magnitude as the radius of the respective valve seat 7, for example, about twice the radius of the valve seat 7, in contrast with the radius of curvature of the guide portion 13 of the known solution shown in Figure 1b, which was almost ten times greater than the radius of the seat 7.

By virtue of the configuration of the duct 8b according to the invention, the positioning angle ϕ adopts a value differing substantially from the range of between 280° and 300°, for example, a value of about 260°, as shown in Figure 2, so that the turbulence index T for the duct 8b is satisfactory and such as not to penalize the overall turbulence index of the intake ducts 8a and 8b of the cylinder 1, so as to achieve optimal engine performance by virtue of the fact that the duct 8b contributes effectively to the generation of a swirling motion in the fluid supplied to the cylinder 1.

## Claims

1. A reciprocating internal combustion engine, particularly of the direct-injection type, in which a plurality of intake ducts (8a, 8b) extending through the cylinder head of the engine are associated with each cylinder (1) of the engine, each intake duct having an inlet portion (9, 13) which is arranged substantially parallel to the plane of the top of the cylinder block and which has a first end (14) for connection to an intake manifold of the engine and a second end (16) connected to an outlet portion (11, 15) of the duct (8a, 8b) opening into the cylinder (1) in a respective intake-valve east (5, 7), the intake ducts (8a, 8b) of each cylinder (1) comprising a main intake duct (8a) oriented in a manner such that the fluid emerging therefrom is subject to a swirling motion coaxial with the axis (A) of the cylinder (1), and at least one filling intake duct (8b) which opens into the cylinder (1) in a valve seat (7) disposed upstream of the valve seat (5) associated with the main intake duct (8a), with reference to the direction of rotation of the swirling motion, the outlet portion (15) of the at least one filling duct (8b) being scroll-shaped and the inlet portion (13) having a mouth portion (13a) which is substantially straight and a guide portion (13b) which is interposed between the mouth portion (13a) and the scroll-shaped portion (15) of the duct (8b), and which has an arcuate shape with opposite curvature to that of the scroll-shaped portion (15), the inlet portion (13) of said at least one filling duct (8b) being shaped in a manner such that the resultant (R) of the velocity vector of the fluid which passes through its second end (16) is directed in a direction such as to be deflected, relative to the axis (A) of the cylinder (1), in accordance with the swirling motion generated by the fluid admitted to the cylinder (1) through the main intake duct (8a);
**characterized in that** the angle of positioning (ϕ) of the scroll-shaped portion (15) relative to the axis (A) of the cylinder (1) differs substantially from 290°, and is about 260°; the angle of positioning (ϕ) being the angle formed, in the sense of the said swirling motion, starting from the plane passing through the cylinder axis (A) and through the axis of the valve seat (7) of the intake filling duct (8b), and ending at the plane which passes through said axis of the valve seat of the intake filling duct (8b) and which is parallel to the initial section (16) of the scroll-shaped portion (15) of the intake filling duct (8b).

2. A reciprocating internal combustion engine according to Claim 1, **characterized in that** the guide portion (13b) of the filling duct (8b) has a mean radius of curvature of the same order of magnitude as the radius of the respective valve seat (7).

3. A reciprocating internal combustion engine according to Claim 2, **characterized in that** the mean radius of curvature of the guide portion (13b) of the filling duct (8b) is approximately twice the radius of the respective valve seat (7).

4. A reciprocating internal combustion engine according to Claim 1, particularly of the direct-injection type, having a cylinder filling intake duct comprising an inlet portion (13) arranged substantially parallel to the plane of the top of the cylinder block and having a first end (14) for connection to an intake manifold of the engine and a second end (16) connected to a scroll-shaped outlet portion (15) of the duct (8b) opening into the cylinder (1) in a respective intake-valve seat (7), in which the inlet portion (13) has a mouth portion (13a) which is substantially straight and a guide portion (13b) having an arcuate shape with opposite curvature to the scroll-shaped portion (15) and interposed between the mouth portion (13a) and the scroll-shaped portion (15), **characterized in that** its guide portion (13b) has a mean radius of curvature of the same order of magnitude as the radius of the respective valve seat (7).

5. A duct according to Claim 4, **characterized in that** the mean radius of curvature of its guide portion (13b) is approximately twice the radius of the respective valve seat (7).

## Patentansprüche

1. Hubkolben-Verbrennungsmotor, insbesondere vom Direkteinspritztyp, wobei eine Mehrzahl von sich durch den Zylinderkopf des Motors erstreckenden Einlassrohren (8a, 8b) mit jedem Zylinder (1) des Motors zusammenhängt, wobei jedes Einlassrohr einen Einlassteil (9, 13) hat, der im Wesentlichen parallel zur Ebene des Kopfs des Zylinderblocks angeordnet ist und ein erstes Ende (14) zur Verbindung mit einem Einlassverteiler des Motors sowie ein zweites Ende (16) besitzt, das an einen Auslassteil (11, 15) des in einem entsprechenden Einlassventilsitz (5, 7) in den Zylinder (1) führenden Rohrs (8a, 8b) angeschlossen ist, wobei die Einlassrohre (8a, 8b) jedes Zylinders (1) ein Haupteinlassrohr (8a), das solcherart ausgerichtet ist, dass die daraus austretende Flüssigkeit einer zur Achse (A) des Zylinders (1) koaxialen, wirbelnden Bewegung ausgesetzt wird, und zumindest ein Einfüll-Einlassrohr (8b) umfasst, das in den Zylinder (1) führt, und zwar in einem Ventilsitz (7), der in Bezug auf die Rotationsrichtung der wirbelnden Bewegung stromaufwärts des mit dem Haupteinlassrohr (8a) zusammenhängenden Ventilsitzes (5) angeordnet ist, wobei der Auslassteil (15) des zumindest einen Einfüllrohrs (8b) spiralenförmig ist und der Einlassteil (13) einen im Wesentlichen geraden Öffnungsteil (13a) und einen Führungsteil (13b) besitzt, der zwischen dem Öffnungsteil (13a) und dem spiralenförmigen Teil (15) des Rohrs (8b) eingeschaltet ist und eine gebogene Form mit einer Krümmung, die jener des spiralenförmigen Teils (15) entgegengesetzt ist, aufweist, wobei der Einlassteil (13) dieses zumindest einen Einfüllrohrs (8b) solcherart geformt ist, dass die Resultierende (R) des Geschwindigkeitsvektors der durch sein zweites Ende (16) fließenden Flüssigkeit in eine Richtung gelenkt wird, um relativ zur Achse (A) des Zylinders (1) abgelenkt zu werden, und zwar gemäß der wirbelnden Bewegung, die von der durch das Haupteinlassrohr (8a) in den Zylinder (1) eingelassenen Flüssigkeit erzeugt wird;
**dadurch gekennzeichnet, dass** sich der Positionierungswinkel (ϕ) des spiralenförmigen Teils (15) relativ zur Achse (A) des Zylinders (1) wesentlich von 290° unterscheidet und etwa 260° beträgt, wobei der Positionierungswinkel (ϕ) jener Winkel ist, der im Sinne der wirbelnden Bewegung gebildet ist, und zwar ausgehend von jener Ebene, die durch die Zylinderachse (A) und durch die Achse des Ventilsitzes (7) des Einlass-Einfüllrohrs (8b) geht, und endend auf jener Ebene, die durch die Achse des Ventilsitzes des Einlass-Einfüllrohrs (8b) geht und zum Anfangsabschnitt (16) des spiralenförmigen Teils (15) des Einlass-Einfüllrohrs (8b) parallel ist.

2. Hubkolben-Verbrennungsmotor gemäß Anspruch 1, **dadurch gekennzeichnet, dass** der Führungsteil (13b) des Einfüllrohrs (8b) einen mittleren Krümmungsradius von derselben Größenordnung wie der Radius des entsprechenden Ventilsitzes (7) besitzt.

3. Hubkolben-Verbrennungsmotor gemäß Anspruch 2, **dadurch gekennzeichnet, dass** der mittlere Krümmungsradius des Führungsteils (13b) des Einfüllrohrs (8b) etwa zweimal der Radius des entsprechenden Ventilsitzes (7) ist.

4. Hubkolben-Verbrennungsmotor gemäß Anspruch 1, insbesondere vom Direkteinspritztyp, mit einem Zylinder-Einfüll-Einlassrohr, umfassend einen Einlassteil (13), der im Wesentlichen parallel zur Ebene des Kopfs des Zylinderblocks angeordnet ist und ein erstes Ende (14) zur Verbindung mit einem Einlassverteiler des Motors sowie ein zweites Ende (16) besitzt, das an einen spiralenförmigen Auslassteil (15) des in einem entsprechenden Einlassventilsitz (7) in den Zylinder (1) führenden Rohrs (8b) angeschlossen ist, worin der Einlassteil (13) einen im Wesentlichen geraden Öffnungsteil (13a) und einen Führungsteil (13b) besitzt, der eine gebogene Form mit einer Krümmung, die jener des spiralenförmigen Teils (15) entgegengesetzt ist, aufweist und zwischen dem Öffnungsteil (13a) und dem spiralenförmigen Teil (15) eingeschaltet ist, **dadurch gekennzeichnet, dass** sein Führungsteil (13b) einen mittleren Krümmungsradius von derselben Größenordnung wie der Radius des entsprechenden Ventilsitzes (7) besitzt.

5. Rohr gemäß Anspruch 4, **dadurch gekennzeichnet, dass** der mittlere Krümmungsradius seines Führungsteils (13b) etwa zweimal der Radius des entsprechenden Ventilsitzes (7) ist.

## Revendications

1. Moteur alternatif à combustion interne, en particulier du type à injection directe, dans lequel une pluralité de conduits d'admission (8a, 8b) qui s'étendent à travers le bloc de culasse du moteur sont associés à chaque cylindre (1) du moteur, chaque conduit d'admission ayant une partie d'entrée (9, 13) qui est agencée sensiblement parallèlement au plan du sommet du bloc de culasse et qui comporte une première extrémité (14) destinée à être connectée à un collecteur d'admission du moteur et une deuxième extrémité (16) connectée à une partie de sortie (11, 15) du conduit (8a, 8b) et s'ouvrant dans le cylindre (1) dans un siège (5, 7) de soupape d'admission respective, les conduits d'admission (8a, 8b) de chaque cylindre (1) comprenant un conduit d'admission principal (8a) orienté de manière telle que le fluide qui émerge de celui-ci est soumis à un mouvement de tourbillonnement coaxial avec l'axe (A) du cylindre (1), et au moins un conduit d'admission de remplissage (8b) qui s'ouvre dans le cylindre (1) dans un siège de soupape (7) disposé en amont du siège de soupape (5) associé au conduit d'admission principal (8a), en se référant à la direction de rotation du mouvement de tourbillonnement, la partie de sortie (15) dudit au moins un conduit de remplissage (8b) ayant la forme d'une volute, et la partie d'entrée (13) ayant une partie d'embouchure (13a) qui est sensiblement droite, et une partie de guidage (13b) qui est interposée entre la partie d'embouchure (13a) et la partie en forme de volute (15) du conduit (8b) et qui a une forme arquée avec une courbure opposée à celle de la partie en forme de volute (15), la partie d'entrée (13) dudit au moins un conduit de remplissage (8b) étant formée d'une manière telle que la résultante (R) du vecteur vitesse du fluide qui traverse sa deuxième extrémité (16) est dirigée dans une direction telle qu'elle est défléchie, par rapport à l'axe (A) du cylindre (1), en accord avec le mouvement de tourbillonnement engendré par le fluide admis vers le cylindre (1) via le conduit d'admission principal (8a);
**caractérisé en ce que** l'angle de positionnement (ϕ) de la partie en forme de volute (15) par rapport à l'axe (A) du cylindre (1) diffère sensiblement de 290°, et est d'environ 260°, l'angle de positionnement (ϕ) étant l'angle formé, dans le sens dudit mouvement de tourbillonnement, en commençant depuis le plan passant par de l'axe (A) du cylindre et par l'axe du siège de soupape (7) du conduit d'admission de remplissage (8b) et se terminant au niveau du plan qui passe par ledit axe du siège de soupape du conduit d'admission de remplissage (8b) et qui est parallèle au tronçon initial (16) de la partie en forme de volute (15) du conduit d'admission de remplissage (8b).

2. Moteur alternatif à combustion interne selon la revendication 1, **caractérisé en ce que** la partie de guidage (13b) du conduit de remplissage (8b) a un rayon de courbure moyen du même ordre de grandeur que le rayon du siège de soupape respective (7).

3. Moteur alternatif à combustion interne selon la revendication 2, **caractérisé en ce que** le rayon de courbure moyen de la partie de guidage (13b) du conduit de remplissage (8b) est approximativement deux fois le rayon du siège de soupape respective (7).

4. Moteur alternatif à combustion interne selon la revendication 1, en particulier du type à injection directe ayant un conduit d'admission de remplissage des cylindres, comprenant une partie d'entrée (13) agencée sensiblement parallèlement au plan du sommet du bloc de culasse et ayant une première extrémité (14) destinée à être connectée à un collecteur d'admission du moteur et une deuxième extrémité (16) connectée à une partie de sortie en forme de volute (15) du conduit (8b) qui s'ouvre dans le cylindre (1) dans un siège de soupape d'admission respective (7), dans lequel la partie d'entrée (13) a une partie d'embouchure (13a) qui est sensiblement droite, et une partie de guidage (13b) ayant une forme arquée avec une courbure opposée à la partie en forme de volute (15) et interposée entre la partie d'embouchure (13a) et la partie en forme de volute (15), **caractérisé en ce que** sa partie de guidage (13b) a un rayon de courbure moyen du même ordre de grandeur que le rayon du siège de soupape respective (7).

5. Conduit selon la revendication 4, **caractérisé en ce que** le rayon de courbure moyen de sa partie de guidage (13b) est approximativement deux fois le rayon du siège de soupape respective (7).
